# FASCICULE DE BREVET EUROPEEN

(11) **EP 2 260 655 B1**
(45) Date de publication et mention de la délivrance du brevet: **04.06.2014**
(21) Numéro de dépôt: 09726487.3
(22) Date de dépôt: 20.03.2009
(51) Int. Cl.: H04B 7/26, H04B 7/155

(54) **STATION RELAIS A DOUBLE RADIO**
DOPPELTE FUNKRELAISSTATION
DOUBLE RADIO RELAY STATION

(30) Priorité: 04.04.2008 FR 0801869
(43) Date de publication de la demande: 15.12.2010
(73) Titulaire: THALES, 92200 Neuilly-sur-Seine (FR)
(72) Inventeur: HETHUIN, Serge, F-92700 Colombes (FR); TONNERRE, Arnaud, F-92700 Colombes (FR); DUPREZ, Adrien, F-92700 Colombes (FR)
(74) Mandataire: Dudouit, Isabelle
(86) Numéro de dépôt international: PCT/EP2009/053311
(87) Numéro de publication internationale: WO 2009/121730

(56) Documents cités:
- WO-A-2008/070007
- CHRISTIAN HOYMANN ET AL: "Multihop Communication in Relay Enhanced IEEE 802.16 Networks" PERSONAL, INDOOR AND MOBILE RADIO COMMUNICATIONS, 2006 IEEE 17TH INTER NATIONAL SYMPOSIUM ON, IEEE, PI, 1 septembre 2006 (2006-09-01), pages 1-4, XP031023538 ISBN: 978-1-4244-0329-5
- SUN ET AL.: "Dynamic frame structure for IEEE802.16j relaying transmission to support efficient scheduling" IEEE 802.16 MULTIHOP RELAY PROJECT, 7 novembre 2006 (2006-11-07), pages 1-16, XP002480519 Extrait de l'Internet: URL:http://wirelessman.org/relay/contrib/C 80216j-06_224.pdf> [extrait le 2009-01-12]

## Description

L'invention concerne une station relais équipée d'une ou de plusieurs antennes émetteur-récepteur et utilisant deux modules radio, basés sur la même technologie, qui sont couplés entre eux et synchronisés au niveau de la couche d'accès au milieu plus connue sous la dénomination anglo-saxonne MAC (Medium Access Control).

La mise en oeuvre de station relais dans les systèmes de communication à haute capacité, à titre d'exemple le système WiMax, est un enjeu fondamental pour les applications de sécurité civile. Par exemple, il est possible de citer les systèmes de surveillance en banlieue ou encore la surveillance de points sensibles. Il est aussi possible de citer des applications de défense, telles que la protection de camps et le contrôle de zone.

Les standards civils tentent actuellement d'apporter des solutions. Par exemple, le comité de normalisation IEEE est en train de spécifier ce type de mécanismes pour les systèmes WiMAX mobiles (802.16e) au sein du groupe 802.16j. Les informations plus complètes sont disponibles sur le site de Wikipédia. Cependant, le déploiement de cette technologie nécessitera un développement nouveau et complet des modules de radio présents actuellement dans les systèmes ou « chipsets » qui peuvent engendrer des difficultés technologiques et aussi des coûts.

Dans la description, les lettres RF désignent la radio fréquence et les lettres BB, le signal Bande de Base.

L'objet de la présente invention concerne des architectures systèmes et matérielles (plus connues sous la désignation anglo-saxonne hardware) permettant le développement rapide et à faible coût de stations relais. Cette nouvelle approche est notamment basée sur le couplage de deux modules radios au sein d'une station relais qui sont synchronisés au niveau de la couche MAC.

Le document intitulé « Multihop communication in relay enhanced IEE 802.16 networks » présente deux façons d'intégrer une communication multi-sauts dans un système IEEE 802.16. Le premier concept suit une approche centralisée où la station de base a un contrôle total sur la cellule de relais. Le deuxième concept suit une approche semi-distribuée où une station relais contrôle celui qui veut s'inscrire dans le réseau.

La solution proposée prend en compte la possibilité de déployer des antennes directives pouvant fonctionner dans deux niveaux hiérarchiques (supérieur et inférieur), pour un réseau de communication déployé sous une forme d'arbre. Cette approche est basée sur la mise en oeuvre d'antennes intelligentes bas coûts à commutation rapide ou FESA (Fast Electronically Steerable Antenna). La topologie en arbre est composée d'une station de base de niveau hiérarchique la plus élevée, de stations relais RS et de stations d'abonnés SS.

Dans la suite de la description, la lettre « n » est utilisée pour désigner un niveau de hiérarchie donné dans la structure en arbre de réseau, « n-1 » pour désigner le niveau de hiérarchie supérieur au niveau n et « n+1 » pour désigner un niveau de hiérarchie inférieur au niveau n. De plus, le terme « trame » désigne une période de temps récurrente comprenant les différentes allocations de ressources pour chaque station. Elle peut également être appelée « supertrame » et se trouve généralement délimitée par l'émission des motifs de synchronisation.

L'invention concerne une station relais RS utilisée dans un réseau de communication ayant une architecture en arbre constituée de plusieurs niveaux hiérarchiques TLᵢ, ledit réseau de communication comprenant un point central, par exemple une station de base BS₀. de niveau hiérarchique le plus élevé, une ou plusieurs stations relais RSᵢ et une ou plusieurs station(s) abonnée(s) SSi, caractérisé en ce qu'une station relais RSₙ comporte au moins deux modules radio, un premier module radio étant adapté à communiquer avec des stations de niveau hiérarchique inférieur TL₍ₙ₊₁₎ et un deuxième module radio étant adapté à communiquer avec des stations de niveau hiérarchique supérieur TL₍ₙ₋₁₎, ladite RS utilise deux fréquences différentes pour les communications réalisées dans le niveau hiérarchique inférieur TL₍ₙ₊₁₎ et dans le niveau hiérarchique supérieur TL₍ₙ₋₁₎, les deux modules radio étant synchronisés au niveau de leur couche MAC et ladite station relais comprenant au moins une antenne reliée à ladite couche MAC des modules radio. Le relayage des informations est effectué au niveau de la couche MAC de manière à minimiser les délais des transmissions de bout en bout.

L'invention concerne également le partage de la bande passante entre les différents noeuds d'un réseau tel que décrit précédemment. Dans ce cadre, deux modes de fonctionnement sont décrits apportant différentes structures de trame. Le mode multi-canal correspond à l'utilisation de plusieurs canaux de fréquence sur les différents niveaux hiérarchiques rattachés à la station relais. Dans le mode mono-canal, une station relais fonctionne sur la même fréquence dans les différents niveaux hiérarchiques qui lui sont associés. L'invention concerne aussi un procédé ou protocole de transmission mis en oeuvre au sein d'une station relais présentant au moins l'une des caractéristiques précitées caractérisé en ce qu'il utilise une antenne intelligente et ladite antenne intelligente utilisant un mode omnidirectionnel dans les périodes de la trame dans lesquelles la station relais émet en mode diffusion vers le niveau hiérarchique inférieur ou dans lesquelles la station relais reçoit des messages émis dans une période de contentions, lesdits messages émis dans ces deux périodes de la trame utilisant une modulation robuste (telle que QPSK) alors que les autres créneaux de transmissions utilisent des modulations adaptées à offrir un débit plus élevé.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple de topologie de réseau point-multipoint,
- La figure 2, un exemple de topologie en arbre à quatre niveaux,
- La figure 3A et la figure 3B, un premier exemple de schéma fonctionnel et l'architecture associée d'une station relais selon l'invention,
- Les figures 4A et 4B, un deuxième exemple de schéma fonctionnel et une architecture d'une station relais selon l'invention,
- Les figures 5A et 5B, un troisième exemple de schéma fonctionnel et d'une architecture relais selon l'invention,
- La figure 6, un exemple de structure de trame utilisée dans le cas d'un fonctionnement en mode multi-canal,
- La figure 7, un exemple de structure de trame utilisée pour le fonctionnement en mode mono-canal,
- La figure 8, un deuxième exemple de structure de trame utilisée pour le fonctionnement en mode mono-canal,
- La figure 9A, un exemple de structure de trame dans un arbre à plusieurs niveaux en mode monocanal,
- La figure 9B, un autre exemple de structure de trame dans une branche de l'arbre à plusieurs niveaux avec réutilisation spatiale,
- La figure 10, un tableau regroupant des caractéristiques de transmission pour une configuration donnée,
- La figure 11, les étapes mises en oeuvre au cours de la procédure d'entrée d'une station dans le réseau,
- La figure 12, les étapes exécutées lors de procédures de poursuite, et
- La figure 13, un schéma représentant la direction de scrutation d'une antenne.

Afin de mieux faire comprendre l'architecture et le fonctionnement des stations relais selon l'invention, l'exemple de la description met en oeuvre une antenne intelligente de type FESA dans un contexte 802.16d et 802.16e, par exemple.

Sans sortir du cadre de l'invention, cette dernière peut aussi s'appliquer pour des antennes omnidirectionnelles. L'utilisation d'antennes intelligentes FESA permet notamment d'obtenir un gain meilleur et une meilleure rapidité dans des changements de direction de pointage.

La description visera aussi, à titre d'exemple, le contexte WiMAX, au sein d'un système comprenant une ou plusieurs stations de base (BS), des stations relais (RS) et des stations abonnées (SS).

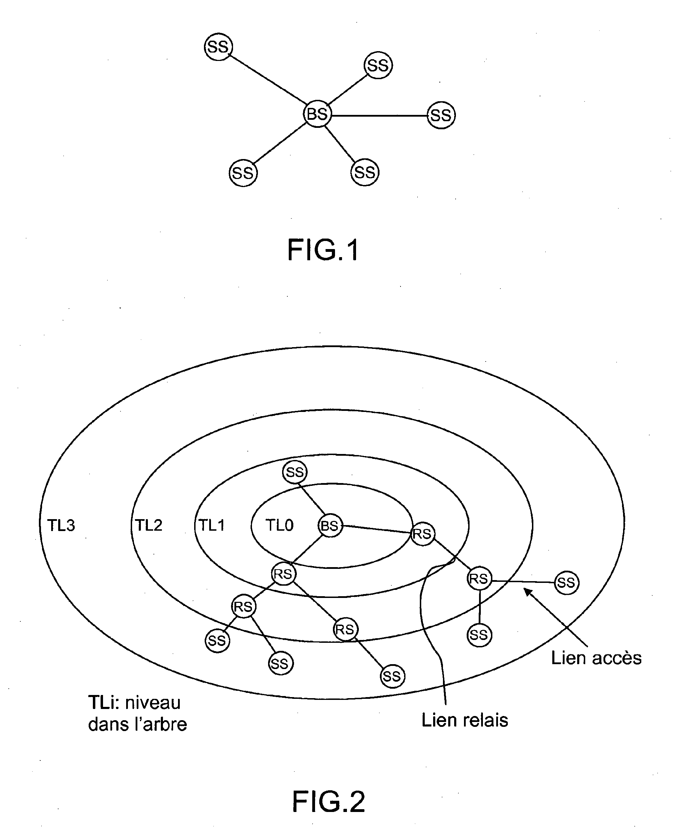

La figure 1 représente un exemple d'architecture d'un système point-multipoint comprenant une station de base BS communiquant avec plusieurs stations abonnées SS qui sont distribuées sous la forme d'étoile. Une telle structure offre une couverture limitée et des connexions limitées aussi.

La figure 2 représente une architecture qui met en oeuvre plusieurs stations relais RS. Cette architecture correspond à une topologie en arbre dans laquelle les stations relais RS communiquent avec la station de base BS du système et aussi avec les stations abonnées SS. Le réseau a une structure d'arbre qui est composé de plusieurs niveaux hiérarchiques désignés par les lettres TLᵢ où i désigne un niveau de hiérarchie dans le réseau. Une station relais RS a notamment la capacité de relayer les flux d'information circulant sur le lien montant (vers une station de base, la station de base principale du réseau ou bien le module radio ayant le rôle d'une station de base d'une station relais). Elle a aussi la capacité de relayer les flux d'information circulant sur le lien descendant (station de base vers station relais ou station relais vers station abonnée SS).

Une zone d'accès représente tous les liens existants entre une station abonnée SS et une station relais RS ou encore entre une station abonnée SS et la station de base. Une zone relais est relative aux liens appelés liens relais, lien entre deux stations relais RS ou bien entre une station relais RS et la station de base BS. Par exemple, la topologie point-multipoint consiste exclusivement en des liens d'accès. Le mode de relayage selon l'invention est un mode de relayage dit « non transparent » dans lequel tous les paquets, incluant la signalisation, sont transmis par les stations relais RS. L'architecture dans laquelle est mise en oeuvre l'invention comporte, notamment, une station de base BS et plusieurs stations abonnées SS qui peuvent être connectées à cette station de base BS en utilisant une ou plusieurs stations relais RS. Le réseau a par exemple la forme d'un arbre précitée avec différents niveaux TL₀, TL₁, etc. où l'indice i le plus faible correspond au niveau de hiérarchie le plus élevé. Une station relais RS peut être implémentée pour fonctionner avec un au moins des deux modes suivants : un premier mode qui fonctionne en mono-canal (une seule fréquence est utilisée par la RS) et un deuxième mode qui fonctionne en multi-canal (la RS utilise deux fréquences différentes pour les communications réalisées dans les deux différents niveaux hiérarchiques). Ces deux modes de fonctionnement nécessitent la présence de deux modules radio pour opérer, un module radio pouvant être vu comme une station abonnée capable de communiquer avec une BS ou une RS de niveau supérieur, et un module radio correspondant à une station de base, pouvant communiquer avec une SS ou une RS de niveau hiérarchique inférieur.

En considérant une station relais RS comprenant deux modules radio selon l'invention, la topologie de réseau basée sur l'arbre peut être divisée en plusieurs sous-réseaux, chaque sous-réseau consistant en une radio fonctionnant comme station de base BS d'un niveau hiérarchique TLₙ associée à un ou plusieurs modules radio assimilés à une station abonnée SS de niveau TLₙ₊₁ inférieur. De tels sous-réseaux correspondent à des topologies point-à-multipoint interconnectées par des stations relais.

Trois exemples d'architecture pour une station relais selon l'invention sont donnés pour illustrer le principe mis en oeuvre par l'invention. Les exemples sont donnés en mettant en oeuvre une antenne intelligente de type FESA. Ces antennes sont contrôlées par la couche MAC de la station WiMAX en temps réel de façon à commander le système avec un très faible temps de commutation. L'objectif est de changer la direction de faisceau après chaque transmission de paquets afin d'autoriser des communications point-à-mutlipoints. Sans sortir du cadre de l'invention, il est aussi possible d'utiliser tout type d'antenne comportant une fonction émission et une fonction réception. Plusieurs exemples d'architecture vont être détaillés pour mieux faire comprendre le fonctionnement d'une station relais selon l'invention.

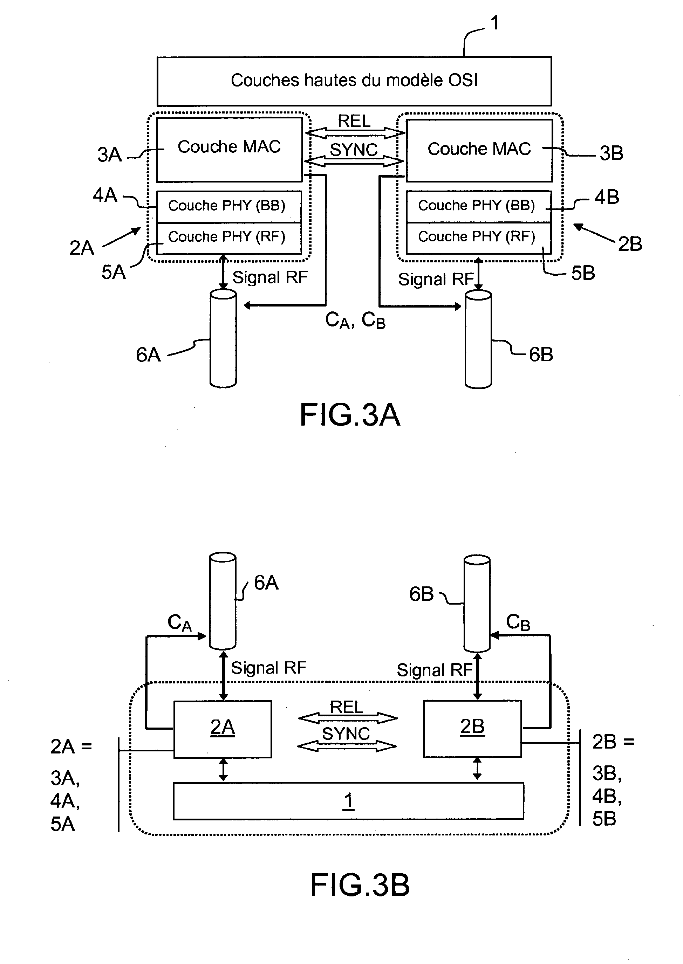

La figure 3A est un premier schéma fonctionnel pour une station relais selon l'invention.

Une station relais selon l'invention comprend par exemple une carte mère 1 comprenant les couches hautes du modèle OSI, et deux modules radio 2A, 2B. Chaque module radio 2A, 2B comprend une couche d'accès au milieu MAC (Medium Access Control) 3A, 3B, une couche physique Bande de base, 4A, 4B, une couche physique radio fréquence RF 5A, 5B. Les couches physiques 5A, 5B reçoivent le signal radio fréquence en provenance des antennes 6A, 6B ou permettent l'émission d'un signal radio-fréquence RF. L'antenne 6A, 6B est dans cet exemple de réalisation une antenne intelligente de type FESA. Toutefois, tout type d'antennes intelligentes ou omnidirectionnelles peut être utilisé en lieu et place de l'antenne FESA.

Une station relais RS peut être vue comme une station comprenant un premier module radio 2A (3A, 4A, 5A) et un deuxième module radio 2B (3B, 4B, 5B), les deux modules étant synchronisés entre eux. Le premier module est dédié, par exemple à la communication avec les stations de niveau hiérarchique supérieur et le deuxième module est dédié à la communication avec les stations de niveau hiérarchique inférieur.

Un des modules radio du relais, par exemple, le module 2A comprenant la couche MAC 3A, la couche physique bande de base 4A et la couche physique radio fréquence 5A regroupe les couches basses dédiées à la communication avec les stations de niveau hiérarchique inférieur.

La figure 3B représente un exemple d'architecture ou implémentation physique correspondant au schéma fonctionnel représenté à la figure 3A. Les numéros ont été repris pour désigner les éléments ou modules constituant la station relais, décrits par leur fonctionnalité à la figure 3A.

Sur la figure 3A, sont aussi représentés : les flux d'information relayés REL qui concernent les couches MAC 3A, 3B ; la commande de synchronisation SYNC entre les couches MAC 3A, 3B des modules radio du relais selon l'invention, les commandes C_{A} et C_{B} des antennes gérées par une couche MAC.

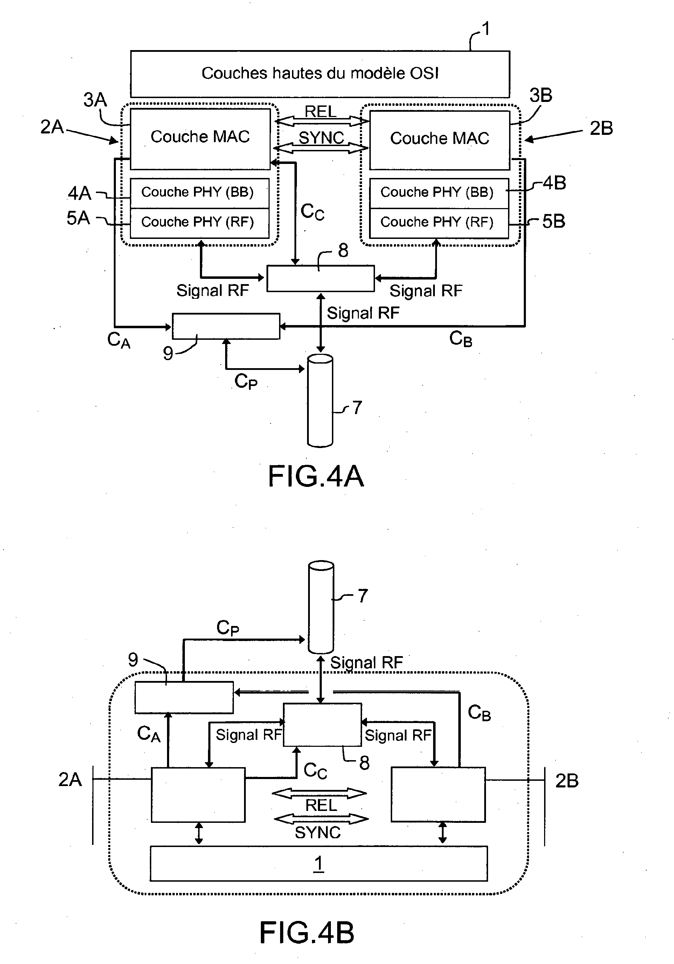

Les figures 4A et 4B représentent une variante de réalisation de la station relais, qui comprend une seule antenne 7 d'émission-réception, un premier commutateur 8 par lequel transitent les signaux radio fréquence RF émis ou en provenance de l'antenne 7, le commutateur 8 étant contrôlé par une commande C_{C} issue par exemple de la couche MAC 3A dédiée à la communication avec les stations de niveau hiérarchique supérieur. En effet une des deux radios de la Station Relais a un rôle de maître. Cette radio dite maître pourrait être par exemple la partie SS car c'est elle qui reçoit le motif de synchronisation du niveau hiérarchique supérieur et qui peut donc synchroniser l'autre partie sur le niveau supérieur. Plus précisément, en ce qui concerne la commande du commutateur C_{C}, les deux parties ont connaissance de la structure de la trame et par conséquent savent exactement quand les commutations doivent être réalisées. Il est donc plus simple qu'un seul élément, la radio dite maître, gère les commutations. Un deuxième commutateur 9 est utilisé pour véhiculer des commandes provenant des couches MAC 3A et 3B (commande C_{A} et C_{B}) et à destination de l'antenne 7. La commande C_{P} correspond à la juxtaposition des commandes C_{A} et C_{B} et permet de contrôler la direction du lobe principal de l'antenne 7. Les éléments identiques à ceux des figures 3A et 3B portent les mêmes références. Le commutateur 8 reçoit par exemple de la couche MAC 3A, une commande de contrôle CTRL ayant notamment pour fonction de sélectionner le module radio devant fonctionner en fonction de la communication en lien montant ou en lien descendant.

La synchro SYNC et le relayage REL sont toujours exécutés au niveau des couches MAC 3A, 3B. Le relayage de paquets de données, de contrôle et de management est par exemple effectué au niveau deux de la pile protocolaire OSI en établissant un lien entre les deux couches MAC des deux modules radio de cette même station.

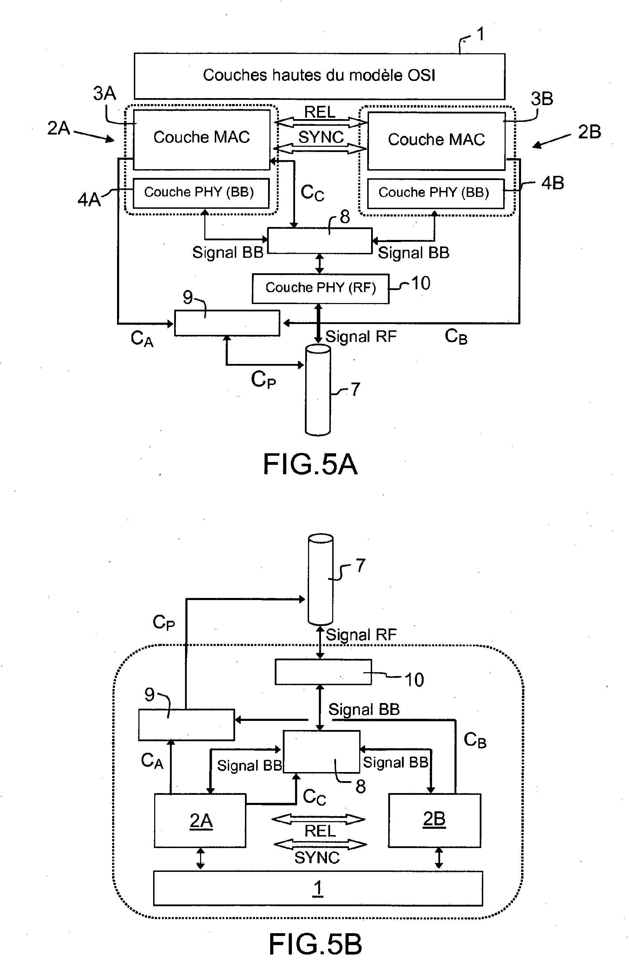

Les figures 5A et 5B représentent une variante de réalisation d'une station relais dans laquelle la couche physique radio fréquence 10 est commune aux deux modules radio et est disposée entre le commutateur 8 et l'antenne 7.

Dans ce cas, le signal bande de base émis par une des couches physiques passe par un commutateur 8 avant d'être transmis à une couche physique radio fréquence 10 qui communique avec l'antenne 7. La commande de contrôle C_{C} du commutateur 8 est transmise par la couche MAC 3A par exemple. Les signaux de synchronisation SYNC et les données relayées REL sont échangés entre les couches MAC 3A, 3B du relais selon l'invention. La commande d'antenne C_{P} est déduite des commandes d'antenne C_{A} et C_{B} par l'intermédiaire du commutateur 9. La commande C_{C} issue d'une couche MAC permet notamment de choisir le module radio actif en fonction de la communication à un instant donné.

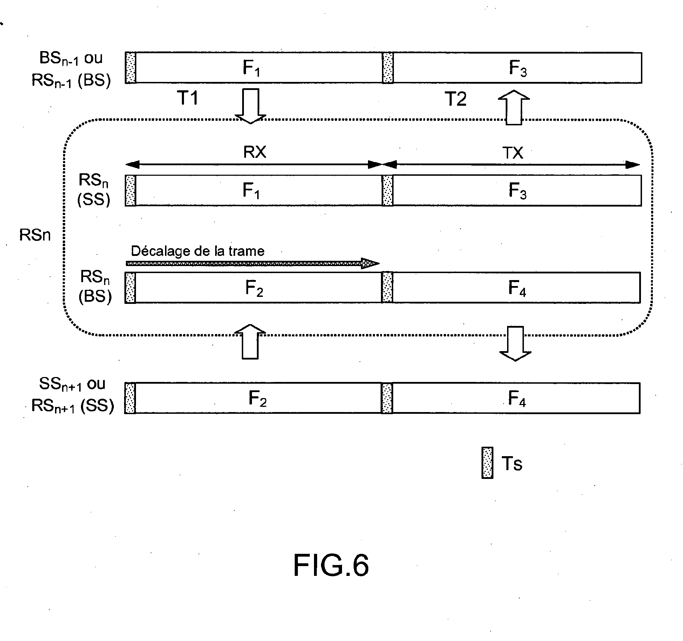

La figure 6 schématise une structure de trame pouvant fonctionner dans un contexte de transmission multi-canal (station relais en mode multi-canal).

Dans ce mode, deux radios peuvent fonctionner de façon simultanée car elles utilisent des fréquences différentes. Cependant il faut prendre en compte les interférences (co-site notamment) entre canaux adjacents car une transmission émise sur une fréquence peut causer des interférences sur un des canaux adjacents. Pour résoudre ce problème, la structure de trame pour le mode multi-canal est construite sur le principe suivant ; quand une des deux radios de la station relais reçoit, la deuxième radio ne doit pas émettre. Dans ce cas, les deux radios doivent être dans le même état, soit en émission, soit en réception. Dans cette structure de trame, le début de la trame d'une des radios est décalé pour faire coïncider les périodes de TX et de RX et à chaque changement de niveau hiérarchique la radio qui effectue le décalage doit être modifiée.

Les indices n, n-1, n+1 sont utilisés pour désigner les différents niveaux auxquels se situent les stations relais et correspondant aux indices des niveaux TLᵢ dans la structure en arbre de réseau. Dans les exemples décrits aux figures 6, 7 et 8, le niveau TLₙ est choisi pour désigner une station relais qui communique avec une station de base de niveau supérieur TLₙ₋₁, en considérant l'arbre de hiérarchie de la figure 2, et aussi avec une station de niveau inférieur ou niveau TLₙ₊₁.

La structure de trame d'une station relais de niveau n, RS_{n,} est décomposée en deux parties correspondant à une période de réception (période RX) et une période d'émission (période TX).
- Dans la période RX correspondant au créneau temporel T₁, la partie « station abonnée » RSₙ (SS) de la station relais reçoit les données F₁ émises par la station de base BSₙ₋₁ ou par une station relais RSₙ₋₁ de niveau supérieur (flux descendant). De plus la partie « station de base » RSₙ (BS) de cette station relais reçoit des flux F₂ provenant d'une ou plusieurs station(s) abonnée(s) SSₙ₊₁ ou station(s) relais RSₙ₊₁ de niveau hiérarchique inférieur (flux montant).
- Dans la période TX, correspondant au créneau temporel T₂ la partie « station abonnée » RSₙ (SS) de la station relais émet des données F₃ vers la BSₙ₋₁ ou la RSₙ₋₁ de niveau supérieur (flux montant) et la partie « station de base » RSₙ (BS) de cette station relais transmet des données F4 vers une ou plusieurs SSₙ₊₁ ou RSₙ₊₁ de niveau hiérarchique inférieur n+1 (flux descendant).

La station de base BS et la partie « station de base » des stations relais RS jouent le rôle de maître dans le sous-réseau qui leur est associé (formé avec les stations de niveau hiérarchique inférieur). Elles transmettent un motif de synchronisation (non représenté pour des raisons de simplification de figure) à leurs noeuds du réseau esclaves afin de synchroniser temporellement les trames. D'autre part, la synchronisation globale du réseau est obtenue par une synchronisation (au niveau de la couche MAC) des deux parties de la station relais ; RS (SS) et RS (BS). Elle peut être effectuée par l'envoi d'un motif de synchronisation de la partie RS (SS) vers la partie RS (BS) au sein d'une station relais au début d'une des périodes (RX ou TX). En effet dans une architecture centralisée l'ensemble des noeuds du réseau se synchronisent sur la station de base (point central). La synchronisation s'effectue donc par bond successif en partant du niveau supérieur vers le niveau inférieur. C'est pour cette raison que la RS (SS) envoie le motif de synchronisation à la RS (BS), ce qui revient à synchroniser le niveau hiérarchique inférieur sur le niveau supérieur.

Dans l'ensemble du système, les différents sous-réseaux (une BS ou RS (BS) associée à une ou plusieurs SS ou RS (SS)) doivent utiliser des canaux différents afin d'éviter des interférences entre sous-réseaux. Il est possible de mettre en oeuvre des mécanismes de réutilisation spatiale en particulier grâce à la directivité apportée par des antennes intelligentes, connues de l'Homme du métier et qui ne seront donc pas détaillées.

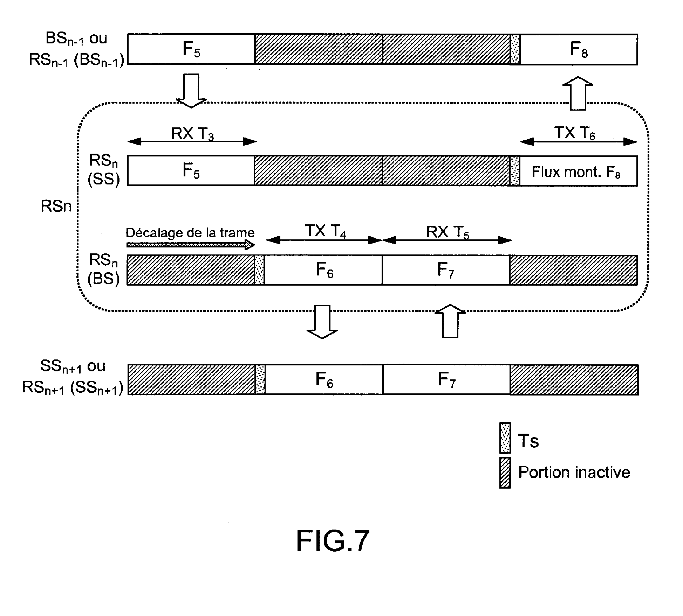

La figure 7 schématise une autre structure de trame pouvant être utilisée, cette fois-ci, dans un contexte de transmission mono-canal (station relais en mode mono-canal). Les notations de la figure 6 sont reprises pour les éléments ou modules correspondant.

Lorsque la profondeur de l'arbre est limitée à deux sauts (c.a.d. une branche de l'arbre peut contenir une seule station relais), les trames sont divisées en 4 parties, symbolisées par les périodes T₃, T₄, T₅ et T₆ sur la figure 7. A noter que, dans une station relais, le début de la trame de niveau hiérarchique inférieur est décalé de manière à faire correspondre la fin de la période T₃ avec le début de la période T₄. Avec ces notations, le procédé se déroule de la manière suivante : dans la première période RX (créneau temporel T₃), la partie SS de la station relais RSₙ reçoit des informations ou flux de données F₅ de la station de base BSₙ₋₁ ou de la station relais RSₙ₋₁ d'un niveau supérieur, pendant ce temps, la partie RSₙ (BS) de la station relais est au repos.

Puis dans la première période TX, correspondant au créneau temporel T₄, c'est la partie RSₙ (BS) de la station relais qui va émettre des informations ou flux de données F₆ vers une ou plusieurs station(s) abonnée(s) ou RSₙ₊₁. Ensuite une commutation TX/RX permet à la même partie, la RSₙ (BS), de recevoir des données F₇ transmises depuis le niveau hiérarchique inférieur n+1.

Enfin, dans la deuxième période TX, créneau temporel T₆, la partie RSₙ (SS) de la RS peut émettre des informations F₈ vers la station de base de niveau supérieur n-1.

La synchronisation entre les deux modules radio peut être obtenue en transmettant un motif de synchronisation de la partie RSₙ (SS) vers la partie RSₙ (BS) à la fin de la première période RX, correspondant par exemple au début d'une trame 802.16 (émission du préambule) dans le contexte du WiMAX.

Dans le cas précédent, si plusieurs stations relais de même niveau hiérarchique coexistent dans le réseau, alors il est nécessaire de gérer de façon précise les allocations pour chaque RS dans les périodes TX (T₄ et T₆).

Lorsque la profondeur de l'arbre est supérieure à deux sauts (c.a.d. si une branche de l'arbre peut comporter plus d'une station relais), une structure « multi-trame » est mise en oeuvre. Dans ce cas, deux sous-réseaux comportant des niveaux hiérarchiques consécutifs utilisent la même trame, ainsi une trame additionnelle est utilisée pour deux autres sous-réseaux utilisant des niveaux hiérarchiques inférieurs. Par exemple dans une branche du réseau qui comporte 3 stations relais, les sous-réseaux BS₀ / RS₁ (SS) et RS₁ (BS) / RS₂ (SS) utilisent la trame t alors que les sous-réseaux RS₂ (BS) / RS₃ (SS) et RS₃ (BS) / SS₄ utilisent la trame t+1.

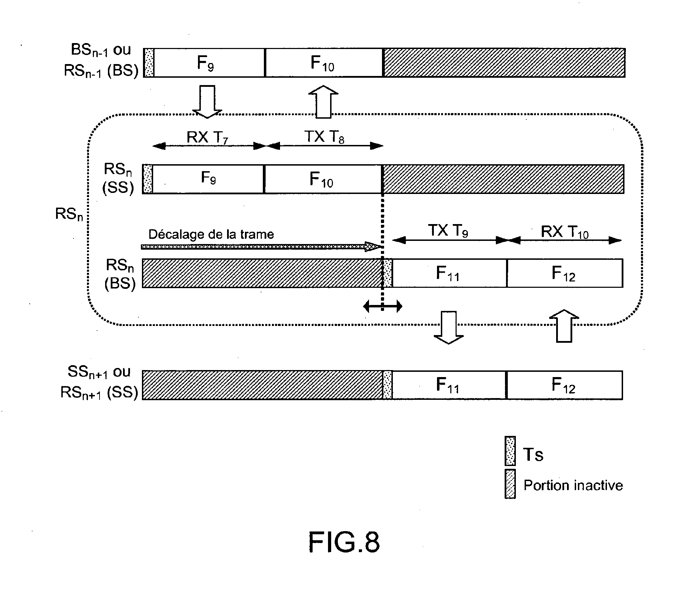

Cette manière de procéder est intéressante dans le cas où une branche de l'arbre comporterait un maximum de une station relais, c'est-à-dire dans le cas où la profondeur de l'arbre serait inférieure ou égale à 2 sauts. L'avantage d'une telle approche est relatif à la localisation de chacune des portions dans la trame, ce qui permet un relayage efficace des informations. La figure 8 présente une organisation différente de la trame par rapport à la figure 7, l'objectif étant de simplifier le développement de la station relais. Dans ce cas, les structures de trame utilisées par les différents sous-réseaux sont identiques, en fait, elles sont simplement décalées de manière à éviter les interférences entre sous-réseaux.

Dans un réseau simple comprenant simplement une station relais, et en reprenant certaines des notations des figures 6 et 7 précédentes, le procédé selon l'invention se déroule de la manière suivante : dans la première période RX, créneau temporel T₇, la partie RSₙ (SS) de la station relais reçoit des informations ou flux de données F₉ de la station de base ou relais d'un niveau supérieur, pendant ce temps, la partie RSₙ (BS) de la station relais est au repos.

Puis dans la première période TX, créneau temporel T₈, c'est toujours la partie RSₙ (SS) de la station relais qui est en fonctionnement. Par contre cette fois elle va émettre des informations F₁₀ vers la station de niveau supérieur. Ensuite cette partie de la RS est au repos, alors que la partie station abonnée est active. Tout d'abord elle à la possibilité d'émettre vers le niveau inférieur des flux F₁₁ dans la période T₉, et ensuite de recevoir, dans la période T₁₀, des flux F₁₂ provenant également du niveau inférieur.

La synchronisation entre les deux stations peut être obtenue en transmettant un motif de synchronisation de la partie SS vers la partie BS de la station relais à la fin de la période T₈, correspondant par exemple au début d'une trame 802.16 (émission du préambule) dans le contexte du WiMAX.

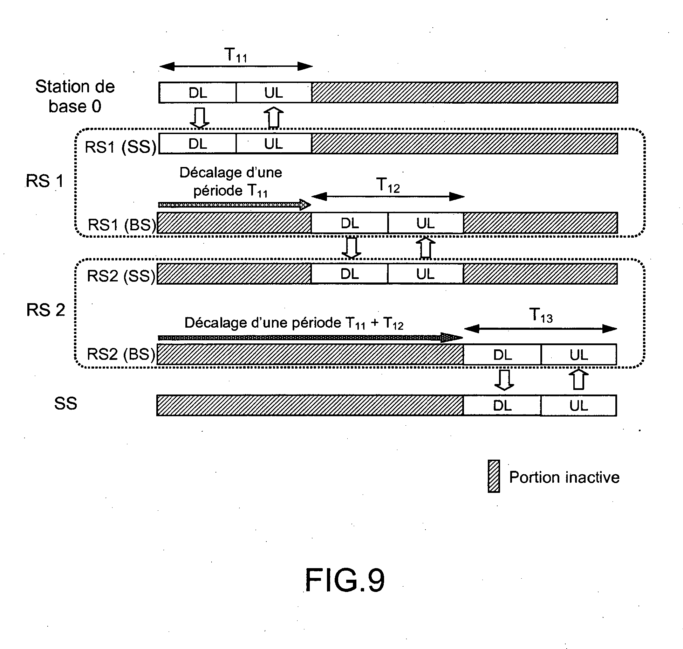

Cette solution permet une implémentation matérielle plus simple. Cette organisation peut être étendue à des réseaux utilisant plusieurs stations relais (nombre de sous-réseaux supérieur à deux), simplement en allouant une période RX et une période TX consécutives à chaque sous-réseau. Ainsi l'incorporation d'un nouveau sous-réseau dans le système nécessite une réduction de la bande passante pour chaque sous-réseau déjà associé (sans mécanisme de réutilisation spatiale), et l'allocation de deux périodes de communication (RX et TX) dédiées à ce sous-réseau. Cette allocation doit être décalée par rapport aux autres allocations afin d'éviter les interférences entre sous-réseaux. La figure 9A présente un exemple de structure de trame dans lequel le réseau comprend deux stations relais.

A noter qu'il est possible de faire démarrer un nouveau cycle entre la BS0 et la RS1(SS) en parallèle de l'échange RS2(BS) et la SS. En fait, on peut limiter la perte en débit, quelque soit le nombre de niveaux de l'arbre dans une branche, à un facteur deux, dû à l'initialisation du pipeline de transmission. Ceci est illustré sur la figure 9B dans laquelle on observe les échanges simultanés entre BS et RS1(SS) d'une part, entre RS2(BS) et RS3(SS) ainsi qu'entre RS4(BS) et la SS d'autre part et donc plus généralement des échanges simultanés entre BS de niveau n avec SS de niveau n+1, BS de niveau n+2 avec SS de niveau n+3, et ainsi de suite dans le cadre d'une réutilisation spatiale.

Les flèches F correspondent aux flux d'informations échangées entre les stations de niveau de hiérarchie différents. Les flèches en grisées correspondent au début d'une nouvelle période comme dans la figure 9A. Les algorithmes de gestion d'allocation sont basés sur des identifiants attribués à la station de base et à chaque station relais. La station de base est toujours associée à l'identifiant 0, et chaque station relais est attachée à un identifiant qui lui est attribué en fonction de son placement dans la topologie en arbre, plus exactement, il est lié au niveau hiérarchique (TLᵢ). L'objectif étant qu'une station de niveau hiérarchique n ait un identifiant supérieur aux stations de niveau supérieur (n-x) et un identifiant inférieur aux stations de niveau hiérarchique inférieur (n+x), x étant le nombre de niveaux séparant les stations. L'invention prévoit deux modes de gestion de l'allocation; un mode statique et un mode dynamique.

Pour le mode statique, un algorithme simple peut être mis en oeuvre pour gérer les allocations effectuées dans la trame. Les stations relais qui doivent être déployées sont connues initialement et leurs identifiants sont attribués lors de leur configuration. Chaque station de base et station relais dispose de la même bande passante qui correspond à la division des ressources disponibles par le nombre de stations relais, incrémenté d'une unité. Un exemple de structure de trame est présenté sur la figure 9, dans laquelle les périodes T₁₁, T₁₂ et T₁₃ seraient égales à une période T. La station de base ainsi que les parties « station de base » de chaque RS déterminent le début de leur période en se basant sur l'identifiant alloué au noeud. Ainsi le décalage par rapport au début de la trame pour une station BS ou RS (BS) ayant l'identifiant y correspond à la multiplication de cet identifiant par la période T. Par conséquent, la station de base du réseau commence toujours au début de la trame. Cet algorithme peut être utilisé lorsque la station de base et les stations relais sont fixes.

Le mode dynamique permet de prendre en compte les modifications de topologie qui peuvent intervenir lors du fonctionnement du réseau dans la gestion des ressources du système. Tout d'abord lorsqu'une station relais est mise en route la partie « station abonnée » scanne le canal prédéfini et essaie de s'associer avec la station dont le motif de synchronisation (préambule, beacon, etc.) correspond à la meilleure qualité de signal. La procédure d'association consiste par exemple en une synchronisation et un échange de données parmi lesquelles les informations d'allocation de ressources destinée à la partie BS de cette même station relais ; le début de l'allocation et la durée de cette allocation.

Lorsque l'association est réalisée avec la station de niveau hiérarchique supérieure, la RSₙ(SS) peut transmettre un motif de synchronisation Ts à la partie « station de base » RSₙ(BS) de cette même station relais à la fin de la première période RX. Ce motif de synchronisation est transmis au temps correspondant au début de l'allocation accordée à la partie RSₙ(BS) et doit également contenir des informations comme par exemple la durée de la période d'allocation pour le sous-réseau géré par la cette RS (BS). D'un point de vue général, c'est la station de base du réseau qui détermine les allocations en fonction des demandes transmises par les différentes stations relais. Pour se faire, des messages sont émis périodiquement (avec une période prédéterminée) par l'ensemble des stations relais à destination de la station de base. Plus précisément, les parties « stations de base » de chaque RS évaluent leur besoin en bande passante et transmettent cette information à la partie « station abonnée » correspondante accompagnée de compléments comme par exemple un indice de priorité. Toutes ces informations sont ensuite transmises à la BS dans le message périodique. Si la BS ne reçoit pas un certain nombre de messages consécutifs provenant d'une RS, alors elle considère celle-ci comme désassociée.

Les identifiants peuvent être modifiés lorsqu'une station relais entre dans le réseau ou en sort (pannes, environnement défavorable, etc). Dans ce cas, la station de base informe l'ensemble des RS du réseau pour qu'elles prennent en compte une modification éventuelle de leur identifiant.

D'un point de vue général, si la station relais n'est pas directement liée à la station de base du réseau, alors les informations échangées entre ces deux noeuds doivent être relayées par la ou les RS intermédiaires. Les données issues de stations de niveaux inférieurs peuvent être fusionnées par une station relais dans un même message destiné à la BS.

Dans les différents exemples décrits ci-avant, il est possible d'utiliser tout type d'antennes.

L'avantage d'utiliser des antennes intelligentes, par exemple FESA, dans un réseau présentant une architecture de type arbre est d'augmenter de manière significative les capacités du système, notamment en ce qui concerne la couverture. En effet, les antennes FESA offrent une capacité de faisceau directionnel et en même temps, leur utilisation permet une exploration sur 360° en exploitant la commutation rapide du faisceau d'antenne. Cette antenne est capable d'opérer dans 2 modes :
➢ Le mode omindirectionnel dans lequel l'antenne émet un faisceaudans toutes les directions en même temps. Le gain d'antenne est plus faible que dans le cas du second mode, ce qui implique une réduction de la portée du noeud associé à l'antenne.
➢ Le mode directionnel, qui est relatif à la sélection d'un faisceau d'antenne pour la communication dans une direction donnée.

Dans le cas d'une architecture de réseau en arbre dans lequel les stations relais peuvent être équipées d'antennes intelligentes, par exemple de type FESA, trois configurations de liens peuvent être rencontrées :
➢ La configuration de lien « omnidirectionnel vers omnidirectionnel » (OvO) dans laquelle aucun noeud n'est équipé d'antennes directives ou intelligentes,
➢ La configuration de lien « omnidirectionnel vers directionnel » (OvD), dans laquelle un des deux noeuds voisins utilisent une antenne omnidirectionnelle alors que l'autre station est équipée d'une antenne-intelligente (FESA par exemple),
➢ La configuration de lien « directionnel vers directionnel » (DvD) dans laquelle deux noeuds voisins sont équipés d'antennes intelligentes.

Pour permettre la mise en oeuvre du procédé selon l'invention dans des stations relais équipées d'antennes intelligentes dans un réseau ayant une architecture en arbre, différentes procédures de recherche sont nécessaires. Les procédures dites en aveugle, sont requises pour les réseaux dans lesquels, les stations ne connaissent pas les coordonnées de leurs voisins proches. Les stations relais RS et/ou les stations abonnées SS sont nomades ou mobiles, il n'y a pas de direction de référence commune dans l'ensemble du réseau. Les descriptions suivantes sont concentrées sur les procédures de commande d'antenne en aveugle.

Lorsqu'une station de base ou la partie « station de base » d'une station relais utilise une antenne omnidirectionnelle, seules les deux configurations OvO et OvD sont envisageables dans le sous-réseau associé et dans ce cas les procédures de découverte de voisins (si une des SS ou RS (SS) du sous-réseau est équipée d'antenne intelligente) n'entraîne pas d'adaptation spécifique des modes de transmission dans la trame.

Par contre, l'utilisation d'une antenne intelligente dans une station de base ou une station relais complexifie les procédures de découverte des voisins. La solution proposée dans cette invention est basée sur des combinaisons particulières entre la modulation utilisée pour la transmission et le mode des antennes intelligentes. Ainsi, les structures de trame présentée précédemment peuvent être divisées en quatre sections, deux sections pour la période montante et deux sections pour la période descendante.
➢ La section 1 est relative à la transmission du motif de synchronisation et aux données destinées à l'ensemble du sous-réseau, elle est comprise dans la période descendante. Par exemple, pour un système WiMAX elle correspond à l'envoi du préambule, de l'en-tête de contrôle ou FCH (frame control header) et le premier créneau temporel pour le lien descendant qui sont diffusés par la station de base ou la partie « station de base » d'une station relais. Dans cette section les messages sont transmis avec une modulation simple telle que BPSK ou QPSK, ce qui correspond à un faible débit. Dans cette section, la station de base du sous-réseau doit utiliser le mode omnidirectionnel de l'antenne intelligente, alors que les antennes réceptrices doivent opérer en mode directionnel de manière à maintenir une couverture donnée ou nominale.
➢ La section 2 regroupe tous les autres créneaux de la période associée au lien descendant. Les données transmises dans ces créneaux peuvent être soit diffusées en broadcast ou multicast et dans ce cas la station de base du sous-réseau doit adopter le même fonctionnement que dans la section 1. Sinon, lorsque les données sont transmises en « unicast », les transmissions peuvent utiliser des débits élevés avec un mode antennaire directionnel au niveau de la BS ou de la RS (BS).
➢ La section 3 est associée aux périodes de contention qui sont utilisées dans la période correspondant au lien montant pour permettre par exemple aux SS et RS (SS) de s'associer à leur station de niveau supérieur. Dans cette section, la station de base ou la partie « station abonnée » de la station relais n'est pas au courant des transmissions qui seront mises en oeuvre par les différentes stations abonnées et ainsi elle doit fonctionner dans un mode omnidirectionnel de façon à être capable de recevoir des messages de contrôle venant de différentes SS ou de RS (SS). Ces messages doivent être transmis avec une modulation simple, correspondant à un débit minimal.
➢ La section 4 regroupe tous les autres créneaux de lien montant, qui sont toujours en transmission « unicast » avec des antennes pouvant fonctionner en mode directionnel sur les deux niveaux hiérarchiques et avec une modulation complexe, comme par exemple la modulation QAM 64, apportant des débits élevés.

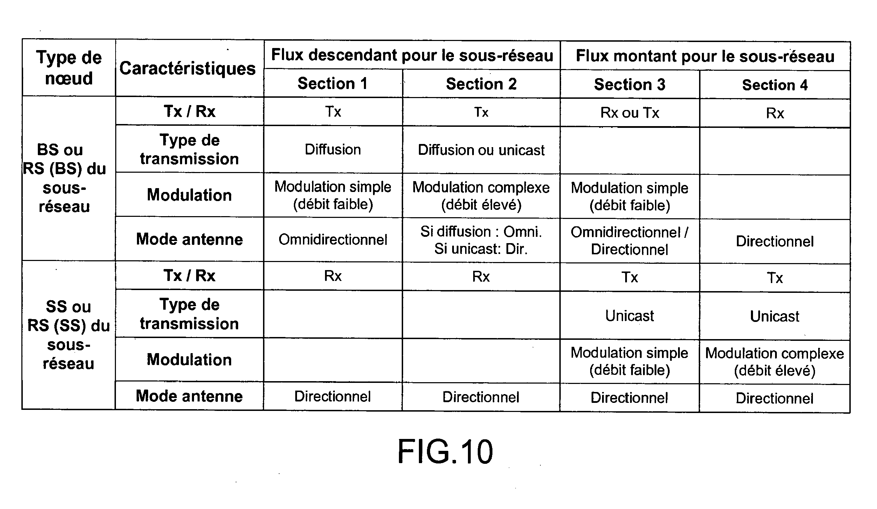

Les caractéristiques de chacune des sections sont regroupées dans le tableau de la figure 10.

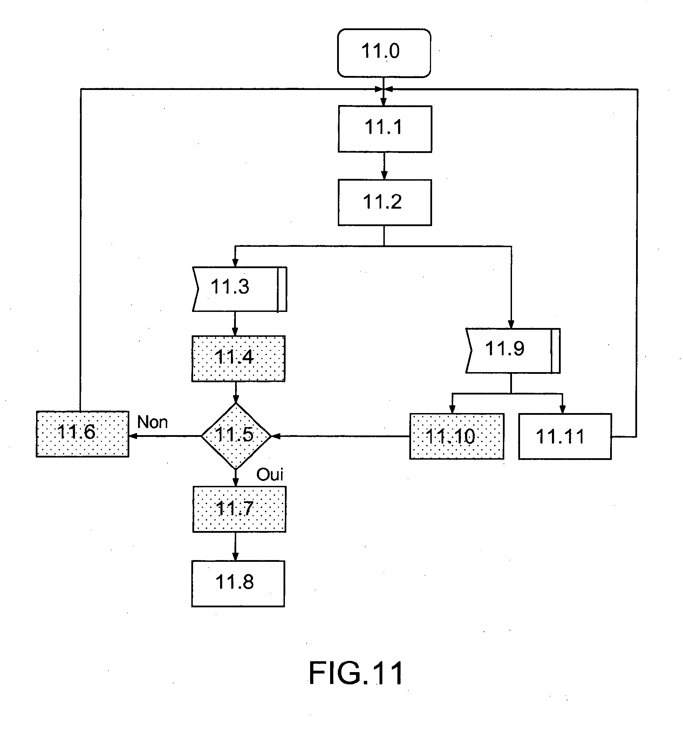

La procédure d'entrée dans le réseau pour une station relais ou une station abonnée a été décrite précédemment, elle comprend la recherche de la station de niveau supérieur apportant les meilleures caractéristiques (nombre de saut vers la BS, qualité du signal reçu, etc), la synchronisation avec cette station et la procédure d'association. Durant la première phase (phase de scrutation), une station équipée d'antennes intelligentes désirant entrer dans le réseau doit scanner les différents canaux disponibles et également tester l'ensemble des positions du faisceau d'une façon « round robin ». Par conséquent, la durée de scrutation Tscan est relative au nombre de canaux disponibles Ncanaux et au nombre de faisceaux Nfaisceaux qui peuvent être utilisés par l'antenne intelligente. Cette procédure de scrutation est détaillée en figure 11 qui schématise les différentes étapes mises en oeuvre au cours de la procédure d'entrée d'une station dans un réseau. En résumé les étapes de cette procédure comportent les étapes suivantes :
Etape 11.0 : début de l'algorithme
Etape 11.1 : démarrage d'un compteur temporel ou timer
Etape 11.2 : recherche d'un motif de synchronisation sur un canal de transmission i, ou d'une trame
Etape 11.3 : si ce motif ou la trame est détecté alors :
   11.4 : mémoriser les mesures effectuées ou métriques
   11.5 : regarder si tous les lobes de l'antenne ont été testés (l'antenne a terminé la scrutation ?)
   11.7 : si oui alors sélectionner le faisceau et effectuer la synchronisation étape 11.8
   11.6 : si non changer de faisceau, changer de canal et retourner à l'étape 11.1
Etape 11.9 : dans le cas où le motif n'est pas détecté (durée du temps dépassé ou timeout), alors
   11.10 : si l'ensemble des canaux a déjà été testé alors aller à l'étape 11.5
   11.11 : s'il n'y a plus de canal de disponible alors scanner le canal i+1 et retourner à l'étape 11.1

Les systèmes WiMAX supportent des procédures permettant l'entrée et l'enregistrement d'une nouvelle station abonnée dans le réseau. La procédure globale d'initialisation peut être divisée en plusieurs phases, comportant la scrutation du canal pour le lien descendant, la synchronisation, une procédure permettant d'effectuer des mesures sur le canal radio (plus connue sous le terme « ranging »), la négociation pour des capacités de base et la configuration des connexions.

Pour l'étape de scrutation, l'algorithme est initialisé 11.0 et un compteur de temps est initialisé 11.1.

Au cours de l'étape de scrutation, la station abonnée ou la partie SS d'une station relais RS scrute les canaux et les positions de faisceau disponibles par exemple suivant une procédure où les mesures sont effectuées à tour de rôle suivant un ordre prédéfini ou procédure dite de « round robin ». Ainsi, la durée de scrutation Tscan est relative au nombre de canaux disponibles Nchannels et au nombre de faisceaux qui peuvent être utilisés par l'antenne Nbeams.

Lorsqu'une station de base ou une station relais (partie BS) est en fonctionnement, elle doit diffuser le préambule, FCH et le premier créneau DL dans un mode omnidirectionnel afin que chaque station de niveau hiérarchique inférieur puisse recevoir ces informations. Ainsi la procédure de scrutation d'un noeud équipé d'une antenne intelligente consiste à chercher le préambule du début de trame transmis par la station de niveau supérieure étape 11.2.

En ce qui concerne les stations abonnées ou la partie SS des stations relais, un faisceau de l'antenne intelligente est sélectionné de manière aléatoire de façon à démarrer l'initialisation. Des mesures sont effectuées pour chaque faisceau et la durée de l'évolution d'un faisceau d'antenne dépend spécifiquement du temps de scrutation ou « scan timer » appelé T20 dans la procédure IEEE 802.16-2004, ce qui correspond à une durée de 2*Tframe. La durée d'évaluation peut être déterminée de la manière suivante si la durée associée au timer T20 est suffisante pour obtenir les mesures de puissance de signal reçue et de taux d'erreur : Tscan = (2*Tframe)NchannelsNbeams.

Durant chaque scrutation, le modem du système de communication peut mémoriser les mesures effectuées afin d'offrir différentes métriques permettant de sélectionner le faisceau disponible pour l'opération. Ces métriques sont, par exemple, divisées en deux sous-groupes de mesures, le premier groupe concerne la mesure de la puissance du signal « SSM » ou en anglo-saxon signal strength metric et le deuxième groupe la mesure de la qualité du signal ou « SQM » pour signal quality metric. En plus de ces métriques, le CPU peut aussi mémoriser différents paramètres associés à chaque mesure tels que l'orientation du faisceau, l'adresse de la station associée. En comparant les différentes valeurs de SSM et de SQM, le module récepteur peut déterminer la meilleure orientation du faisceau pour le signal incident.

Une fois que le faisceau est sélectionné, la procédure ne demande aucune modification comparée à l'algorithme de synchronisation d'un système WiMAX conventionnel Point-MultiPoint (PMP) jusqu'à ce que le noeud soit synchronisé. D'autre part, si la station est une station relais, elle démarrera ensuite la transmission des messages pour les liens descendants (préambule, FCH et premier burst descendant) vers le niveau hiérarchique inférieur. Cette opération est exécutée selon la structure de la trame envisagée pour la station relais.

La gestion de mobilité dans le système proposé est réalisée de la manière suivante.

Un ensemble de mesures sont réalisées en continu et mémorisées à chaque réception de paquets dans toutes les stations. Elles sont basées sur les deux métriques précitées : la force du signal et la qualité du signal. Les valeurs moyennes de ces deux valeurs sont calculées sur un nombre de mesures qui est défini en fonction de l'environnement et de la vitesse de déplacement estimée pour les stations mobiles.

A partir de ces calculs, la station va comparer la métrique obtenue à des valeurs de seuils prédéterminées. Ces paramètres (métrique mesurée) doivent être déterminés de façon suffisamment précise pour distinguer les changements de propagation (ex. un nouvel obstacle), principalement associés à des évolutions de la puissance de signal reçu et des changements dans les angles d'arrivée qui ont un impact sur les deux métriques. Ainsi, lorsque la puissance du signal tombe en dessous d'une valeur seuil, le niveau de puissance seul devrait être ajusté, alors que lorsque les deux métriques SSM et SQM diminuent et tombent en dessous des valeurs seuils prédéterminées, la procédure de poursuite en aveugle doit être mise en oeuvre. Dans ce cas, la station ou ses proches voisins vont se déplacer dans une direction qui a une composante perpendiculaire à la direction d'arrivée ou DOA. Si les deux stations A et B se déplacent selon la ligne droite (A, B), c'est-à-dire sans composante perpendiculaire à la direction d'arrivée des signaux, ou si un obstacle apparait ente les deux noeuds A, B, alors la dégradation de l'état du lien requiert simplement un ajustement de puissance et non pas un changement de direction de l'antenne.

Le procédé de poursuite proposé présente comme avantage de ne pas affecter le comportement du réseau car il s'appuie sur l'utilisation d'un créneau de transmission dédié à la mise en oeuvre de mesures. En effet, une procédure en aveugle pour la gestion de la mobilité des noeuds du réseau, nécessite d'effectuer des mesures avec différentes directions de pointage du faisceau de l'antenne. Une telle modification peut avoir un impact sur la synchronisation si elle est effectuée lors de la transmission du motif de synchronisation et peut aussi être à l'origine d'une perte d'un paquet lorsqu'elle est réalisée en cours de transmission.

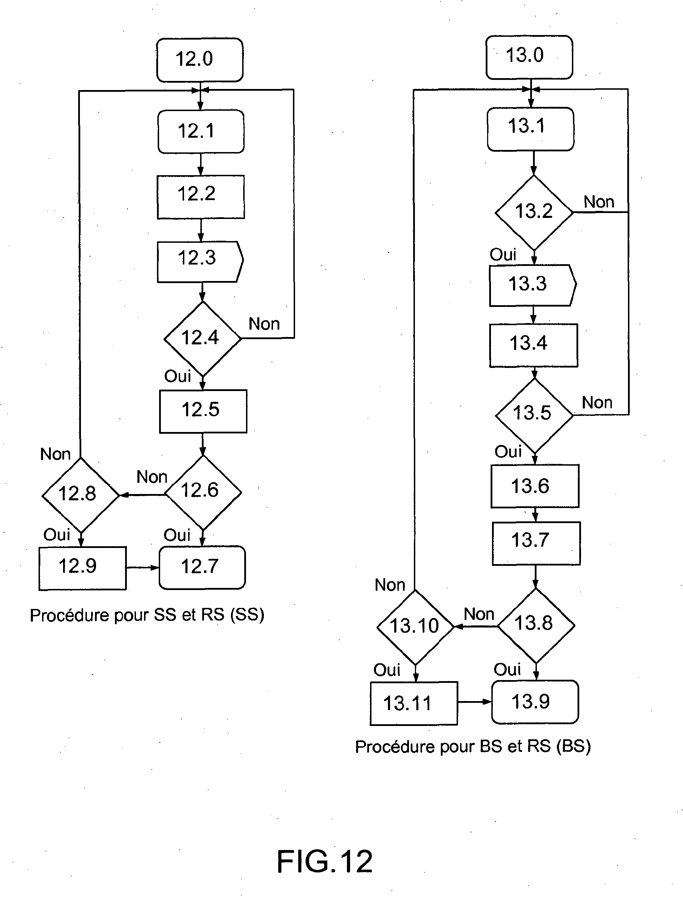

La figure 12 schématise un exemple de procédure mise en oeuvre pour la gestion de mobilité dans les systèmes WiMAX.

Sur cette figure 12 deux procédures sont proposées, l'une pour les stations abonnées SS ou les parties « station abonnée » des stations relais RS(SS), l'autre est dédiée aux stations de base BS ou les parties « station de base » des stations relais RS(BS),

Ainsi la procédure proposée est basée sur l'utilisation de la procédure de « ranging » périodique qui est incluse dans les standards WiMAX. Le « Ranging » est une procédure permettant aux stations SS et BS de maintenir une qualité du lien de communication radio entre elles. La mise en oeuvre de la procédure de poursuite dans la période de « ranging » n'entraine pas de perturbations sur le fonctionnement du réseau car les messages de ranging sont uniquement associés à des mesures. Par conséquent, la perte d'un ou de plusieurs paquets de ranging lors de tests réalisés sur l'antenne (changement de direction du faisceau), n'entraine pas de perte de synchronisation, ni d'augmentation du taux d'erreur sur les paquets de données.

Une SS ou RS(SS) attend étapes 12.0 et 12.1 dans un premier temps la période de ranging dans la trame, puis change étape 12.2 la direction du faisceau et envoie un message de demande de ranging (RNG-REQ) 12.3 à la station de niveau supérieur. Si aucune réponse au message n'est reçue au niveau de cette station, le procédé retourne à l'étape 12.1. Dans le cas contraire, il y a réception d'une réponse étape 12.5 et le noeud réalise des mesures sur le message transmis en réponse par la station de niveau supérieur (RNG-RSP). Cette procédure est réalisée pour un ou plusieurs faisceaux de l'antenne de manière à pouvoir comparer les mesures. Les métriques résultantes sont mémorisées 12.6 et si la valeur mesurée pour chacune des deux métriques est plus élevée que la valeur des niveaux de seuils prédéterminés, 12.7 alors la sélection du faisceau est réussie et la procédure de poursuite est terminée 12.7. Dans le cas contraire, le procédé teste 12.8 si tous les faisceaux ont été testés. Si oui, alors il y a initialisation du faisceau 12.9 et si non, le procédé retourne à l'étape 12.1. L'initialisation du faisceau signifie que le faisceau associé à la meilleure qualité de signal est sélectionné et utilisé par la suite pour le fonctionnement de la station relais lorsque l'antenne intelligente est en mode directionnel. Il se peut qu'aucun faisceau ne soit disponible pour respecter les niveaux requis pour la qualité du signal et la puissance du signal, dans ce cas, le faisceau utilisé avant la procédure est sélectionné et le procédé de poursuite est stoppé.

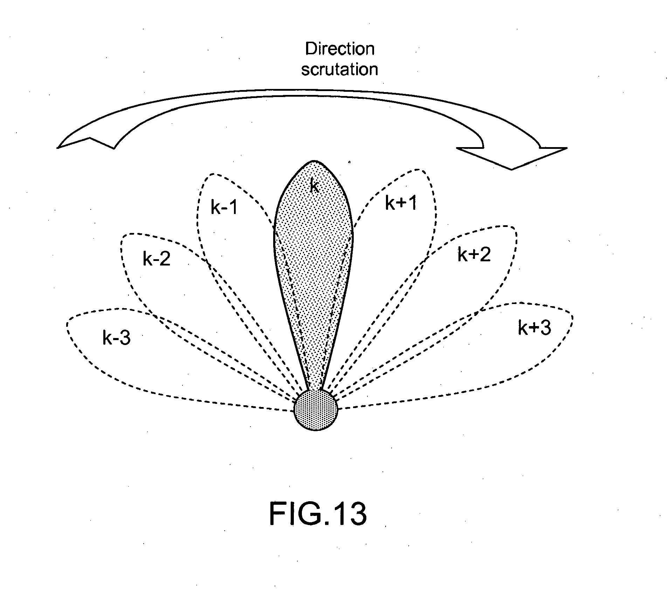

La figure 13 décrit les différentes étapes exécutées lors de la procédure utilisée par une station de base BS ou la partie « station de base » d'une station relais RS(BS) est voisine de celle qui est mise en oeuvre dans les stations SS et RS(SS). Lorsqu'une station déclenche une procédure de tracking 13.0, elle attend la prochaine période de « ranging » dans la trame 13.1, puis change de mode antennaire pour utiliser les capacités omnidirectionnelles de l'antenne intelligente. Dans la période de « ranging », si la station reçoit un message provenant d'une station de niveau hiérarchique inférieur, identifiée comme ayant besoin d'être suivie (procédure de « tracking »), alors elle émet une réponse (RNG-RSP) demandant la retransmission de ce message 13.3. Ensuite elle se met en mode directionnel mettant en oeuvre un des faisceaux directifs et attend de recevoir le message en question 13.4. Ensuite dans l'état 13.5, la station teste si elle reçoit le message. Si la station ne reçoit pas le message alors elle se place dans l'état 13.1. Sinon la station effectue les mesures de qualité de signal sur le paquet reçu 13.6 et ensuite elle change de mode antennaire 13.7 pour se placer en fonctionnement omnidirectionnel et ainsi pouvoir communiquer avec d'autres stations de niveau inférieur dans la période de ranging.

Les étapes 13.8, 13.9, 13.10 et 13.11 sont identiques aux étapes 12.6, 12.7, 12.8 et 12.9 décrites précédemment.

Il est possible de mesurer plusieurs fois les métriques avec le même faisceau de façon à moyenner les valeurs et obtenir ainsi des états de liens plus stables. De plus, la sélection du faisceau dans les procédures précédentes n'est pas aléatoire ou effectuée d'une manière « round robin ». Elle tient compte du comportement de mobilité qui a été observé pendant les mesures précédentes. Ceci est basé sur des indices de faisceaux, présentés sur la figure 13.

Sur cette figure 13, un index k est associé à un faisceau sélectionné avant la procédure de poursuite alors que les autres faisceaux disponibles correspondent à un index en relation avec k. Au début du procédé de poursuite, une direction de scrutation est déterminée, basée sur les mesures mémorisées, permettant à une station d'être au courant de la tendance de mobilité. Tous les faisceaux qui peuvent être disponibles suivant la direction de scrutation recevront un index k incrémenté par le nombre de faisceaux qui le sépare du faisceau initial, l'index incluant le faisceau concerné (k-1, k-2, etc.) Ainsi, un peu près la moitié des faisceaux sont localisés dans la direction de scrutation. En plus, un index de cible est identifié grâce aux mesures mémorisées. Cet index de cible est en relation avec la direction théorique qui devrait être utilisée si le comportement du réseau n'avait pas été modifié.

La première sélection d'un faisceau est basée sur l'index cible (k+x), ensuite aussi longtemps que les métriques sont inférieures aux niveaux de seuils prédéterminés, le faisceau sera sélectionné selon les critères décrits ci-après. La station commence en sélectionnant les faisceaux adjacents (k+x-1) et (k+x+1) et ensuite elle essaye tous les faisceaux dans la direction de scrutation démarrant à partir des faisceaux adjacents. Si le procédé est encore sans succès, alors la station testera les faisceaux qui ne sont pas dans la direction de scrutation, démarrant à partir du faisceau adjacent à la sélection initiale et ensuite en décrémentant l'index.

Le procédé et la station relais selon l'invention offrent notamment les avantages listés ci-après.

La mise au point des stations relais en se basant sur des modules existants, ne nécessite aucune modification de la couche physique et des changements mineurs au niveau de la couche MAC. En outre, l'architecture proposée permettra d'augmenter de façon significative les capacités du réseau grâce à une réutilisation fréquentielle (mode multi-canal). L'invention propose également des mécanismes permettant au réseau de s'autoconfigurer et de s'auto-organiser afin supporter une topologie dynamique. Lorsque l'invention utilise des antennes intelligentes comme par exemple des antennes de type FESA, l'invention présente notamment les avantages suivants :
➢ Dans le mode multi-canal, l'utilisation d'antennes directionnelles permet la réduction d'interférences entre différents canaux adjacents. Ceci permet l'émission et la réception simultanée. Dans les systèmes fixes, la station relais d'une station abonnée peut utiliser une antenne directionnelle. Cependant l'utilisation d'une antenne intelligente permet une reconfiguration automatique du réseau en cas de rupture de lien ou de perte d'une station relais. Dans les systèmes mobiles, une antenne intelligente est requise pour la station abonnée d'une station relais puisque le nceud doit être capable de suivre cette station. En ce qui concerne la station de base d'une station relais, une antenne intelligente, par exemple de type FESA, offre une solution faible coût et à performance élevée en remplaçant les antennes omnidirectionnelles et les antennes intelligentes conventionnelles mettant en oeuvre par exemple du « beam forming ».
➢ Dans le fonctionnement en mode simple canal, il est possible de déployer deux antennes ou seulement une antenne puisque le canal est partagé en temps entre deux radios ou deux modules radios. Pour ce dernier cas d'utilisation, l'utilisation d'une antenne directionnelle simple ne peut être envisagée puisque la station relais RS doit être capable de communiquer avec la station de base et avec plusieurs stations abonnées localisées à différents endroits. Le système FESA offre une capacité de faisceau directionnel tout en conservant une opération omnidirectionnelle en exploitant la commutation très rapide de l'antenne FESA.
➢ La possibilité à la station de base et aux stations relais de communiquer avec leurs stations abonnées avec un meilleur bilan de liaison en comparaison avec des antennes omnidirectionnelles,
➢ L'apport d'une capacité de reconfiguration automatique des relais en cas de panne ou de destruction de l'un d'entre eux, ce que ne permet pas l'utilisation d'antennes directives fixes.

## Revendications

1. Station relais RS utilisée dans un réseau de communication ayant une architecture en arbre constituée de plusieurs niveaux hiérarchiques TLi, ledit réseau de communication comprenant un point central, tel qu'une station de base BS₀, de niveau hiérarchique le plus élevé, une ou plusieurs stations relais RSi et une ou plusieurs station(s) abonnée(s) SSi, **caractérisé en ce qu'**une station relais RSₙ comporte au moins deux modules radio (2A, 2B), un premier module radio (2A) étant adapté à communiquer avec des stations de niveau hiérarchique inférieur TL₍ₙ₊₁₎ et un deuxième module radio (2B) étant adapté à communiquer avec des stations de niveau hiérarchique supérieur TL₍ₙ₋₁₎, ladite RS utilise deux fréquences différentes pour les communications réalisées dans le niveau hiérarchique inférieur TL₍ₙ₊₁₎ et dans le niveau hiérarchique supérieur TL₍ₙ₋₁₎, les deux modules radio (2A, 2B) étant synchronisés au niveau de leur couche MAC et ladite station relais comprenant au moins une antenne (6A, 6B, 7) reliée à ladite couche MAC des modules radio.

2. Station relais selon la revendication 1 **caractérisé en ce que** ladite station relais RSₙ comprend une seule antenne (7) et **en ce qu'**un module radio (2A, 2B) est constitué d'une couche physique bande de base (4A, 4B), une couche physique radio fréquence (5A, 5B) et en une couche MAC (3A, 3B) et **en ce que** ladite station relais comprend un commutateur (8) recevant des signaux radio fréquences RF de la couche physique de chacun des modules et aussi de l'antenne (7), un commutateur (9) recevant les commandes en provenance de la couche MAC et étant relié à ladite antenne.

3. Station relais selon la revendication 2 **caractérisé en ce qu'**il comporte une couche physique (5A, 5B) RF commune aux deux modules radio, ladite couche physique radio fréquence (5A, 5B) étant placée entre le commutateur (8) et l'antenne.

4. Station relais selon la revendication 1 **caractérisé en ce que** la trame contenant les informations ou données à transmettre est composée de deux parties correspondant à une période de réception RX et une période d'émission TX, et **en ce que** la séquence de transmission est la suivante :
- dans la période RX correspondant au créneau temporel T₁, la partie « station abonnée » de la station relais RSₙ(SS) reçoit un flux de données F₁ émises par la station de niveau supérieur (flux descendant), BSₙ₋₁ ou RSₙ₋₁(BS), et la partie « station de base » de cette station relais RSₙ(BS) reçoit un flux de données F₂ provenant d'une ou plusieurs station(s) abonnée(s) SSₙ₊₁ ou RSₙ₊₁(SS) de niveau hiérarchique inférieur (flux montant),
- dans la période TX, correspondant au créneau temporel T₂ la partie « station abonnée » de la station relais RSₙ(SS) émet des données F₃ vers la station de niveau supérieur (flux montant), BSₙ₋₁ ou RSₙ₋₁(BS), et la partie « station de base » de cette station relais RSₙ(BS) transmet des données F₄ vers une ou plusieurs station(s) de niveau hiérarchique inférieur (flux descendant).

5. Station relais selon l'une des revendications 1 à 3 **caractérisé en ce que** la trame contenant les informations ou données à transmettre est composée de deux parties correspondant à une période de réception RX et une période d'émission TX, et **en ce que** la séquence de transmission est la suivante :
➢ dans la première période RX (créneau temporel T₃), la partie SS de la station relais RSₙ(SS) reçoit un flux de données F₅ de la station de niveau supérieur, pendant ce temps, la partie BS de la station relais RSₙ(BS) est au repos,
➢ dans la première période TX, correspondant au créneau temporel T₄, la partie BS de la station relais RSₙ(BS) émet un flux de données F₆ vers une ou plusieurs station(s) de niveau inférieur, ensuite une commutation TX/RX permet à la même partie, la RSₙ(BS), de recevoir un flux de données F₇ transmises depuis le niveau hiérarchique inférieur,
➢ dans la deuxième période TX, créneau temporel T₆, la partie SS de la RSₙ émet des un flux de données F₈ vers la station de niveau supérieur BSₙ₊₁ ou RSₙ₊₁(BS).

6. Station relais selon l'une des revendications 1 à 3 **caractérisé en ce que** la trame contenant les informations ou données à transmettre est composée de deux parties correspondant à une période de réception RX et une période d'émission TX, et **en ce que** la séquence de transmission est la suivante :
➢ dans la première période RX, créneau temporel T₇, la partie SS de la station relais RSₙ(SS) reçoit un flux de données F₉ de la station de niveau supérieur n+1, pendant ce temps, la partie BS de la station relais RSₙ(BS) est au repos,
➢ dans la première partie de la période TX, créneau temporel T₈, la partie BS de la station relais RSₙ(BS) émet un flux de données F₁₀ vers la station de niveau supérieur n+1, ensuite une commutation TX/RX permet à la partie SS de la station relais RSₙ(SS) d'émettre dans le créneau temporel T₉ de la période TX vers une ou plusieurs station(s) de niveau hiérarchique inférieur n-1, puis cette même partie va recevoir dans le créneau temporel T₁₀ de la période RX un flux de données F₁₂ en provenance d'une ou plusieurs station(s) de niveau hiérarchique inférieur n-1.

7. Station relais selon la revendication 6 **caractérisé en ce que** la trame dans une branche permet des transmissions simultanées dans les niveaux n et n+2, à savoir par exemple entre BSₙ₊₂ et SSₙ₊₃ d'un côté et BSₙ et SSₙ₊₁ d'autre part.

8. Station relais selon l'une des revendications 1 à 6 **caractérisé en ce que** la synchronisation est effectuée en transmettant un motif de synchronisation Ts de la partie station abonnée RSₙ(SS) vers la partie station de base RSₙ(BS) à la fin de la première période RX.

9. Station relais selon l'une des revendications 1 à 8 **caractérisé en ce que** le relayage des paquets de données, de contrôle et de management est effectué au niveau deux de la pile protocolaire OSI en établissant un lien entre les deux couches MAC des deux modules radio de cette même station.

10. Station relais selon l'une des revendications 1 à 9 **caractérisé en ce que** l'antenne équipant ladite station relais est une antenne intelligente à commutation rapide, de type FESA.

## Patentansprüche

1. Relaisstation RS, die in einem Kommunikationsnetz mit einer Baumarchitektur verwendet wird, die aus mehreren Hierarchieebenen TLi gebildet ist, wobei das Kommunikationsnetz eine Zentralstelle wie z.B. die Basisstation BS₀ der höchsten Hierarchieebene, eine oder mehrere Relaisstationen RSi und eine oder mehrere Teilnehmerstationen SSi umfasst, **dadurch gekennzeichnet, dass** eine Relaisstation RSₙ wenigstens zwei Funkmodule (2A, 2B) umfasst, wobei ein erstes Funkmodul (2A) zum Kommunizieren mit Stationen der unteren Hierarchieebene TL₍ₙ₊₁₎ ausgelegt ist und ein zweites Funkmodul (2B) zum Kommunizieren mit Stationen der oberen Hierarchieebene TL₍ₙ₋₁₎ ausgelegt ist, wobei RS zwei verschiedene Frequenzen für Kommunikationen in der unteren Hierarchieebene TL₍ₙ₊₁₎ und in der oberen Hierarchieebene TL₍ₙ₋₁₎ benutzt, wobei die beiden Funkmodule (2A, 2B) in der Ebene ihrer MAC-Schicht synchronisiert sind und die Relaisstation wenigstens eine Antenne (6A, 6B, 7) umfasst, die mit der MAC-Schicht der Funkmodule verbunden ist.

2. Relaisstation nach Anspruch 1, **dadurch gekennzeichnet, dass** die Relaisstation RSₙ eine einzige Antenne (7) umfasst, und dadurch, dass ein Funkmodul (2A, 2B) von einer physischen Basisbandschicht (4A, 4B), einer physischen Funkfrequenzschicht (5A, 5B) und einer MAC-Schicht (3A, 3B) gebildet wird, und dadurch, dass die Relaisstation einen Schalter (8) umfasst, der Funkfrequenzsignale RF der physischen Schicht jedes der Module und auch von der Antenne (7) empfängt, wobei ein Schalter (9) die von der MAC-Schicht kommenden Befehle empfängt und mit der Antenne verbunden ist.

3. Relaisstation nach Anspruch 2, **dadurch gekennzeichnet, dass** sie eine den beiden Funkmodulen gemeinsame physische RF-Schicht (5A, 5B) umfasst, wobei die physische Funkfrequenzschicht (5A, 5B) zwischen dem Schalter (8) und der Antenne platziert ist.

4. Relaisstation nach Anspruch 1, **dadurch gekennzeichnet, dass** der die zu übertragenden Informationen oder Daten enthaltende Frame aus zwei Teilen besteht, die einer Empfangsperiode RX und einer Sendeperiode TX entsprechen, und dadurch, dass die Sendesequenz wie folgt lautet:
- in der Periode RX, die dem Zeitschlitz T₁ entspricht, empfängt der "Anschlussstation" Teil der Relaisstation RSₙ(SS) einen Datenfluss F₁ von der Station der oberen Ebene (Abwärtsfluss), BSₙ₋₁ oder RSₙ₋₁(BS), und der "Basisstation" Teil dieser Relaisstation RSₙ(BS) empfängt einen Datenfluss F₂ von einer oder mehreren Anschlussstationen SSₙ₊₁ oder RSₙ₊₁(SS) der oberen Hierarchieebene (Aufwärtsfluss),
- in der Periode TX, die dem Zeitschlitz T₂ entspricht, sendet der "Anschlussstation" Teil der Relaisstation RSₙ(SS) Daten F₃ zur Station der oberen Ebene (Aufwärtsfluss), BSₙ₋₁ oder RSₙ₋₁(BS), und der "Basisstation" Teil dieser Relaisstation RSₙ(BS) sendet Daten F₄ zu einer oder mehreren Stationen der unteren Hierarchieebene (Abwärtsfluss).

5. Relaisstation nach einem der Ansprüche 1 bis 3, **dadurch gekennzeichnet, dass** der die zu sendenden Informationen oder Daten enthaltende Frame aus zwei Teilen besteht, die einer Empfangsperiode RX und einer Sendeperiode TX entsprechen, und dadurch, dass die Sendesequenz wie folgt lautet:
- in der ersten Periode RX (Zeitschlitz T₃) empfängt der Teil SS der Relaisstation RSₙ(SS) einen Datenfluss F₅ der Station der oberen Ebene, während dieser Zeit ist der Teil BS der Relaisstation RSₙ(BS) im Ruhezustand,
- in der ersten Periode TX, die dem Zeitschlitz T₄ entspricht, sendet der Teil BS der Relaisstation RSₙ(BS) einen Datenfluss F₆ zu einer oder mehreren Stationen der unteren Ebene, dann lässt es eine TX/RX-Schaltung zu, dass derselbe Teil, RSₙ(BS), einen von der unteren Hierarchieebene gesendeten Datenfluss F₇ empfängt,
- in der zweiten Periode TX, Zeitschlitz T₆, sendet der Teil SS der RSₙ einen Datenfluss F₈ zur Station der oberen Ebene BSₙ₊₁ oder RSₙ₊₁(BS).

6. Relaisstation nach einem der Ansprüche 1 bis 3, **dadurch gekennzeichnet, dass** der die zu sendenden Informationen oder Daten enthaltende Frame aus zwei Teilen besteht, die einer Empfangsperiode RX und einer Sendeperiode TX entsprechen, und dadurch, dass die Sendefolge wie folgt lautet:
- in der ersten Periode RX, Zeitschlitz T₇, empfängt der Teil SS der Relaisstation RSₙ(SS) einen Datenfluss F₉ von der Station der oberen Ebene n+1, während dieser Zeit ist der Teil BS der Relaisstation RSₙ(BS) im Ruhezustand,
- im ersten Teil der Periode TX, Zeitschlitz T₈, sendet der Teil BS der Relaisstation RSₙ(BS) einen Datenfluss F₁₀ zur Station der oberen Ebene n+1, dann lässt es eine TX/RX-Schaltung zu, dass der Teil SS der Relaisstation RSₙ(SS) im Zeitschlitz T₉ der Periode TX zu einer oder mehreren Stationen der unteren Hierarchieebene n-1 sendet, dann empfängt dieser selbe Teil im Zeitschlitz T₁₀ der Periode RX einen Datenfluss F₁₂, der von einer oder mehreren Stationen der unteren Hierarchieebene n-1 kommt.

7. Relaisstation nach Anspruch 6, **dadurch gekennzeichnet, dass** der Frame in einem Zweig gleichzeitige Sendungen in den Ebenen n und n+2 zulässt, nämlich z.B. zwischen BSₙ₊₂ und SSₙ₊₃ einerseits und BSₙ und SSₙ₊₁ andererseits.

8. Relaisstation nach einem der Ansprüche 1 bis 6, **dadurch gekennzeichnet, dass** die Synchronisation durch Senden eines Synchronisationsmusters Ts vom Teilnehmerstationsteil RSₙ(SS) zum Basisstationsteil RSₙ(BS) am Ende der ersten Periode RX erfolgt.

9. Relaisstation nach einem der Ansprüche 1 bis 8, **dadurch gekennzeichnet, dass** die Weitersendung von Daten-, Steuer- und Managementpaketen in Ebene zwei des OSI-Protokollstapels unter Herstellung einer Verbindung zwischen den beiden MAC-Schichten von zwei Funkmodulen derselben Station erfolgt.

10. Relaisstation nach einem der Ansprüche 1 bis 9, **dadurch gekennzeichnet, dass** die die Relaisstation ausstattende Antenne eine intelligente Antenne mit Schnellumschaltung des Typs FESA ist.

## Claims

1. A relay station RS used in a communication network that has a tree-structured architecture consisting of a number of hierarchical levels TLi, said communication network comprising a central point, for example a base station BS₀, of the highest hierarchical level, one or more relay stations RS₁ and one or more subscriber stations SSi, **characterized in that** a relay station RSₙ has at least two radio modules (2A, 2B), a first radio module (2A) being adapted to communicate with stations of lower hierarchical level TL₍ₙ₊₁₎ and a second radio module (2B) being adapted to communicate with stations of higher hierarchical level TL₍ₙ₋₁₎, said station RS using two different frequencies to communicate with stations of lower hierarchical level TL₍ₙ₋₁₎ and with stations of higher hierarchical level TL₍ₙ₊₁₎, two radio modules (2A, 2B) being synchronized in their MAC layer and said relay station comprising at least one antenna (6A, 6B, 7) connected to said MAC layer of the radio modules.

2. The relay station as claimed in claim 1, **characterized in that** said relay station RSₙ comprises a single antenna (7) and **in that** a radio module (2A, 2B) consists of a base band physical layer (4A, 4B), a radio frequency physical layer (5A, 5B) and an MAC layer (3A, 3B), and **in that** said relay station comprises a switch (8) receiving radio frequency signals RF from the physical layer of each of the modules and also from the antenna (7), a switch (9) receiving the commands originating from the MAC layer and being connected to said antenna.

3. The relay station as claimed in claim 2, **characterized in that** it comprises an RF physical layer (5A, 5B) common to both radio modules, said radio frequency physical layer (5A, 5B) being placed between the switch (8) and the antenna.

4. The relay station as claimed in claim 1, **characterized in that** the frame containing the information or data to be transmitted consists of two parts corresponding to a reception period RX and a transmission period TX, and **in that** the transmission sequence is as follows:
- in the period RX, corresponding to the time slot T₁, the "subscriber station" part of the relay station RSₙ(SS) receives a data stream F₁ transmitted by the higher level station (downward stream), BSₙ₋₁ or RSₙ₋₁(BS), and the "base station" part of this relay station RSₙ(BS) receives a data stream F₂ originating from one or more subscriber stations SSₙ₊₁ or RSₙ₊₁(SS) of lower hierarchical level (upward stream),
- in the period TX, corresponding to the time slot T₂, the "subscriber station" part of the relay station RSₙ(SS) transmits data F₃ to the higher level station (upward stream), BSₙ₋₁ or RSₙ₋₁(BS), and the "base station" part of this relay station RSₙ(BS) transmits data F₄ to one or more stations of lower hierarchical level (downward stream).

5. The relay station as claimed in one of claims 1 to 3, **characterized in that** the frame containing the information or data to be transmitted consists of two parts corresponding to a reception period RX and a transmission period TX, and **in that** the transmission sequence is as follows:
➢ in the first period RX (time slot T₃), the SS part of the relay station RSₙ(SS) receives a data stream F₅ from the higher level station, and during this time, the BS part of the relay station RSₙ(BS) is idle,
➢ in the first period TX, corresponding to the time slot T₄, the BS part of the relay station RSₙ(BS) transmits a data stream F₆ to one or more lower level stations, then a TX/RX switchover enables the same part, RSₙ(BS), to receive a data stream F₇ transmitted from the lower hierarchical level,
➢ in the second period TX, time slot T₆, the SS part of RSₙ transmits a data stream F₈ to the higher level station BSₙ₊₁ or RSₙ₊₁(BS).

6. The relay station as claimed in one of claims 1 to 3, **characterized in that** the frame containing the information or data to be transmitted consists of two parts corresponding to a reception period RX and a transmission period TX, and **in that** the transmission sequence is as follows:
➢ in the first period RX, time slot T₇, the SS part of the relay station RSₙ(SS) receives a data stream F₉ from the station of higher level n+1, and during this time, the BS part of the relay station RSₙ(BS) is idle,
➢ in the first part of the period TX, time slot T₈, the BS part of the relay station RSₙ(BS) transmits a data stream F₁₀ to the station of higher level n+1, then a TX/RX switchover enables the SS part of the relay station RSₙ(SS) to transmit in the time slot T₉ of the period TX to one or more stations of lower hierarchical level n-1, then this same part will receive in the time slot T₁₀ of the period RX a data stream F₁₂ originating from one or more stations of lower hierarchical level n-1.

7. The relay station as claimed in claim 6, **characterized in that** the frame in a branch allows for simultaneous transmissions in the level n and n+2, namely, for example, between BSₙ₊₂ and SSₙ₊₃ on the one hand and BSₙ and SSₙ₊₁ on the other hand.

8. The relay station as claimed in one of claims 1 to 6, **characterized in that** the synchronization is performed by transmitting a synchronization pattern Ts from the subscriber station part RSₙ(SS) to the base station part RSₙ(BS) at the end of the first period RX.

9. The relay station as claimed in one of claims 1 to 8, **characterized in that** the relay of the data, control and management packets is performed at level two of the OSI protocol stack by establishing a link between the two MAC layers of the two radio modules of this same station.

10. The relay station as claimed in one of claims 1 to 9, **characterized in that** the antenna with which said relay station is equipped is a fast-switching smart antenna, of FESA type.
